# EUROPEAN PATENT APPLICATION

(11) **EP 4 418 753 A1**
(43) Date of publication of application: **21.08.2024**
(21) Application number: 24155904.6
(22) Date of filing: 06.02.2024
(51) Int. Cl.: H04W 52/02, H04W 76/28

(54) **METHOD OF COMMUNICATION OPERATION AND USER EQUIPMENT USING THE SAME**

(30) Priority: 17.02.2023 US 202363446362 P
(71) Applicant: Industrial Technology Research Institute, 310401 Hsinchu (TW)
(72) Inventor: Hsieh, Chia-Wen, Chiayi City 600 (TW); Lee, Chien-Min, Taoyuan City 324 (TW)
(74) Representative: Kurig, Thomas

(57) **Abstract**

A method of communication operation and a user equipment using the same method are provided. The method includes: receiving a message including at least one configuration, wherein the at least one configuration is associated with at least one of a cell discontinuous transmission or a cell discontinuous reception; receiving a downlink control information for applying the at least one configuration for a serving cell; and performing a communication operation according to the downlink control information.

## Description

### BACKGROUND

### Technical Field

The disclosure is related to a method of communication operation and a use equipment (UE) using the same method.

### Description of Related Art

If the data scheduling by the network for the UEs is distributed across multiple time slots, the non-active period of a UE may not be concentrated, and the energy consumption at the network side may not be efficient. Further solutions are needed to effectively address this issue.

### SUMMARY

The disclosure is directed to a method of communication operation and a use equipment (UE) using the same method.

In one embodiment of the present disclosure, a method of communication operation adapted to a user equipment including: receiving a message including at least one configuration, wherein the at least one configuration is associated with at least one of a cell discontinuous transmission or a cell discontinuous reception; receiving a downlink control information for applying the at least one configuration for a serving cell; and performing a communication operation according to the downlink control information.

In one embodiment of the present disclosure, a user equipment including a transceiver and a processor coupled to the transceiver, wherein the processor is configured to: receive a message including at least one configuration, wherein the at least one configuration is associated with at least one of a cell discontinuous transmission or a cell discontinuous reception; receive a downlink control information for applying the at least one configuration for a serving cell; and perform a communication operation according to the downlink control information.

To make the aforementioned more comprehensible, several embodiments accompanied with drawings are described in detail as follows.

### BRIEF DESCRIPTION OF THE DRAWINGS

The accompanying drawings are included to provide a further understanding of the disclosure, and are incorporated in and constitute a part of this specification. The drawings illustrate exemplary embodiments of the disclosure and, together with the description, serve to explain the principles of the disclosure.
FIG. 1 illustrates a schematic diagram of connected mode DRX mechanism according to an embodiment of the present disclosure.
FIG. 2 illustrates a schematic diagram of a DRX cycle according to an embodiment of the present disclosure.
FIG. 3 illustrates a schematic diagram of different DRX cycles for different UEs according to an embodiment of the present disclosure.
FIG. 4 illustrates a schematic diagram of a conventional default SSB periodicity according to an embodiment of the present disclosure.
FIG. 5 illustrates a schematic diagram of data transmission for different UEs in time-domain according to an embodiment of the present disclosure.
FIG. 6 illustrates a schematic diagram of a network energy saving cycle according to an embodiment of the present disclosure.
FIG. 7 illustrates a schematic diagram of option 1 according to an embodiment of the present disclosure.
FIG. 8 illustrates a schematic diagram of option 2 according to an embodiment of the present disclosure.
FIG. 9 illustrates a schematic diagram of option 3 according to an embodiment of the present disclosure.
FIG. 10 illustrates a schematic diagram of structures of NES cycle according to an embodiment of the present disclosure.
FIG. 11-12 illustrate schematic diagrams of option A1 for NES cycle according to an embodiment of the present disclosure.
FIG. 13-14 illustrate schematic diagrams of option A2 for NES cycle according to an embodiment of the present disclosure.
FIG. 15-16 illustrate schematic diagrams of option A3 for NES cycle according to an embodiment of the present disclosure.
FIG. 17 illustrates a schematic diagram of a structure of SSB for NES cycle according to an embodiment of the present disclosure.
FIG. 18 illustrates a schematic diagram of NES cycle according to an embodiment of the present disclosure.
FIG. 19 illustrates a schematic diagram of cell coverage according to an embodiment of the present disclosure.
FIG. 20 illustrates a schematic diagram of behavior of UE not configured with DRX according to an embodiment of the present disclosure.
FIG. 21 illustrates a schematic diagram of behavior of UE configured with DRX according to an embodiment of the present disclosure.
FIG. 22 illustrates a schematic diagram of option U1 of the NES cycle according to an embodiment of the present disclosure.
FIG. 23 illustrates a schematic diagram of option U2 of the NES cycle according to an embodiment of the present disclosure.
FIG. 24 illustrates a schematic diagram of option U3 of the NES cycle according to an embodiment of the present disclosure.
FIG. 25 illustrates a schematic diagram of explicitly indicated UL slot according to an embodiment of the present disclosure.
FIG. 26 illustrates a schematic diagram of explicitly indicated UL slot according to an embodiment of the present disclosure.
FIG. 27 illustrates a schematic diagram of implicitly indicated UL slot according to an embodiment of the present disclosure.
FIG. 28 illustrates a schematic diagram of UE according to an embodiment of the present disclosure.
FIG. 29 illustrates a flowchart of a method of communication operation according to an embodiment of the present disclosure.

### DESCRIPTION OF THE EMBODIMENTS

The acronyms in the present disclosure are defined as follows:

| **Acronym** | **Full Name** |
|---|---|
| CG | Configured Grant |
| CSI-RS | Channel State Information Reference Signal |
| DCI | Downlink Control Information |
| DL | Downlink |
| DRX | Discontinuous Reception |
| DTX | Discontinuous Transmission |
| gNB | new Generation NB |
| MAC | Medium Access Control |
| MAC-CE | Medium Access Control - Control Element |
| NACK | Negative-Acknowledgment |
| NR | New Radio |
| NES | Network Energy Saving |
| PBCH | Physical Broadcast Channel |
| PDCCH | Physical Downlink Control Channel |
| PDSCH | Physical Downlink Shared Channel |
| PUCCH | Physical Uplink Control Channel |
| PUSCH | Physical Uplink Shared Channel |
| PRACH | Physical Random Access Channel |
| RA | Random Access |
| RRC | Radio Resource Control |
| SSB | Synchronization Signal/PBCH block |
| SIB | System Information Block |
| SR | Scheduling Request |
| SRS | Sounding Reference Signal |
| SFN | System Frame Number |
| UE | User Equipment |
| UL | Uplink |
| WUS | Wake-Up Signal |
| TDD | Time Domain Division |

Network energy saving is of great importance for environmental sustainability to reduce environmental impact (e.g., greenhouse gas emissions) or to save operational cost. As 5G is becoming pervasive across industries and geographical areas, handing more advanced services and applications (e.g., extended reality (XR)) requiring very high data rates. The networks are being denser and use more antennas, larger bandwidths, or more frequency bands. The environmental impact of 5G needs to stay under control, and novel solutions to improve network energy savings need to be developed.

The techniques for network energy saving may be classified into: time domain, frequency domain, spatial domain, or power domain. The power consumption of a radio access can be split into two parts: a static part and a dynamic part. The static part (e.g., SSB, SIB 1) is consumed all the time to maintain the necessary operation of the radio access devices, even when the data transmission/reception is not on-going. Periodic transmission of one or more common channels/signals may cause gNB hard to enter sleep modes (e.g. energy saving modes). In order to reduce network energy consuming, unnecessary transmission of periodic signals/channels should be prevented. The dynamic part (e.g., PDSCH, PUSCH) is consumed when data transmission/reception is on-going. If data transmission for different UEs can be concentrated in a time period, network may go to sleep in another time period. Therefore, concentrated transmission is beneficial for time-domain energy saving.

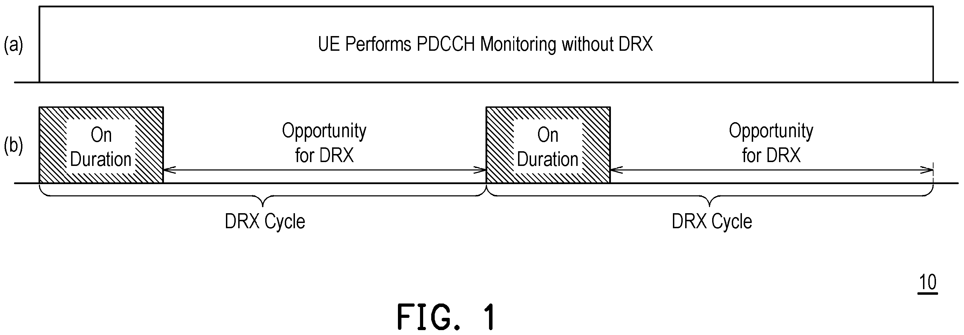

FIG. 1 illustrates a schematic diagram 10 of connected mode DRX mechanism according to an embodiment of the present disclosure. In example (a), the UE not supporting DRX may contiguously monitor DL control channel for decoding PDCCH. Because the UE may not know whether the data transmitted by the network is for the UE or not, the UE may have to be turned on all the time (at least for PDCCH monitoring). It may cause power consumption issue on UE side. Connected mode DRX is one of the mechanisms for relieving UE power consumption issue. In example (b), the UE applying DRX may wake up for a time period and may go into sleep for another time period. It may conserve the battery of the UE.

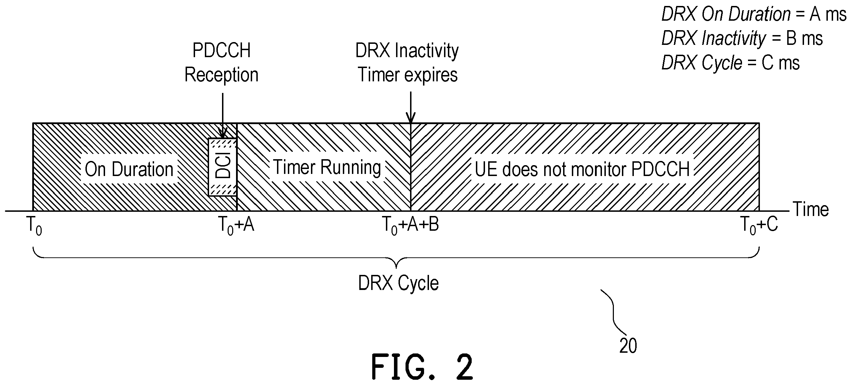

FIG. 2 illustrates a schematic diagram of a DRX cycle 20 according to an embodiment of the present disclosure. The UE may monitor PDCCH in the on-duration of the DRX cycle 20, and the UE may have the opportunity to monitor PDCCH in the remaining time period of the DRX cycle 20. The RRC layer may control DRX operations by configuring the following parameters: *drx-onDurationTimer:* the duration at the beginning of a DRX cycle; and *drx-InactivityTimer:* the duration after the PDCCH occasion, wherein the PDCCH indicates a new UL or DL transmission for the MAC entity. As shown in FIG. 2, the UE may start to perform PDCCH monitoring at time point T₀, and the UE may start *drx-onDurationTimer* at time point T₀. The UE may start *drx-InactivityTimer* at time point T₀+A when the UE receives the latest PDCCH at time point T₀+A,. The UE may perform PDCCH monitoring during time points T₀ ~ T₀+A+B if *drx-InactivityTimer* expires at time point T₀+A+B, wherein DRX on-duration time is A ms and DRX inactivity time is B ms. The UE may not perform PDCCH monitoring after time point T₀+A+B (e.g., duration from time point T₀+A+B to time point T₀+C, wherein DRX cycle is C ms).

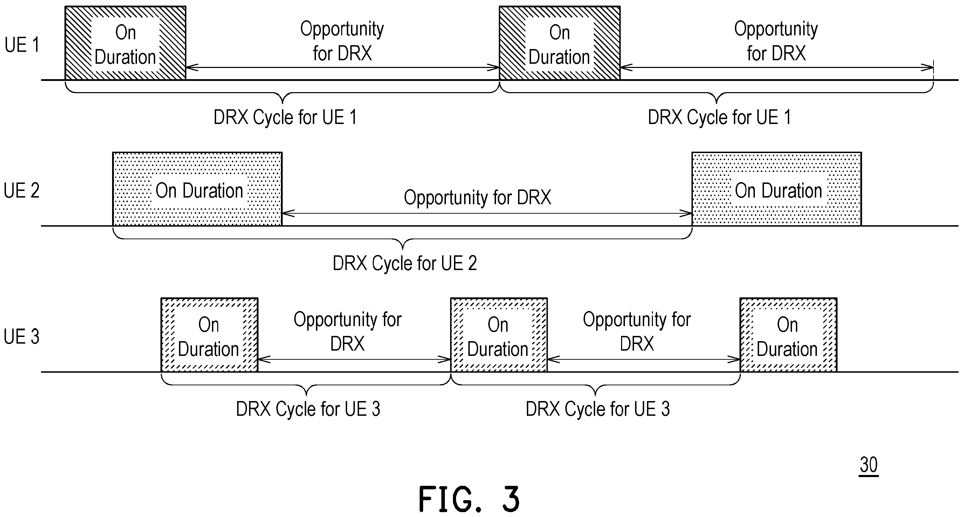

FIG. 3 illustrates a schematic diagram 30 of different DRX cycles for different UEs according to an embodiment of the present disclosure. Since the DRX-related parameters are configured by RRC, different UEs (e.g., UE 1, UE 2, or UE 3) may be configured with different DRX periodicity, on-duration period, or starting position. Data transmission for different UEs may be distributed over a longer period of time; hence, the network may not be easy to conserve energy.

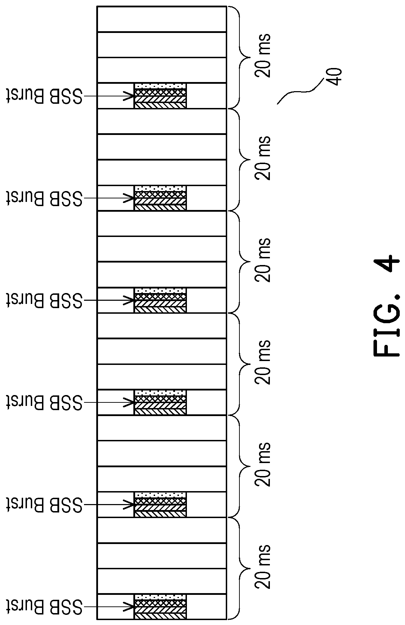

FIG. 4 illustrates a schematic diagram of a conventional default SSB periodicity 40 according to an embodiment of the present disclosure. An SSB may consist of a primary synchronization signal (PSS), a secondary synchronization signal (SSS), or a physical broadcast channel (PBCH). A UE may derive information required to access the cell by an SSB burst for, for example, time-domain synchronization or frequency-domain synchronization. An SSB burst may include one or more SSBs, wherein different SSBs may be transmitted from different beams. An SSB burst may be transmitted within 5ms time period. An SSB burst may either be transmitted in first half (e.g., the first 10ms) or second half (e.g., the last 10ms) of a radio frame. An SSB burst may be transmitted periodically. An SSB periodicity may be configured via RRC, wherein the value of the SSB periodicity may be {5ms, 10ms, 20ms, 40ms, 80ms, 160ms}. Moreover, the default SSB periodicity may be 20ms. The SSB is always transmitted even when data transmission/reception is not on-going.

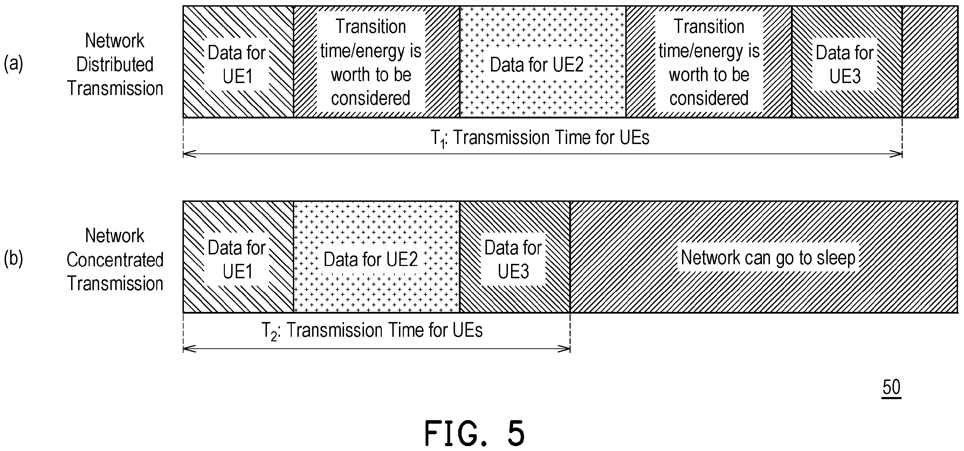

FIG. 5 illustrates a schematic diagram 50 of data transmission for different UEs in time-domain according to an embodiment of the present disclosure. For a conventional system, a network may always be turned on for preparing on-going data transmission/reception. In order to reduce dynamic part power consumption in time domain, concentrated transmission may be considered. Data transmission for different UEs may be concentrated in a time period, and the network may go to sleep in another time period. For example, compared with (a) network distributed transmission, (b) network concentrated transmission may provide a time period for the network to go to sleep.

For a conventional system, a default SSB periodicity is 20ms even when the data transmission/reception is not on-going. As shown in FIG. 4, a conventional UE may perform an SSB measurement every 20ms even when the conventional UE does not receive/transmit data. Periodic transmission of common channel/signal may cause gNB head to enter sleep modes. In order to reduce static part power consumption in time-domain, SSB enhancement may be considered (e.g., reducing the transmission density of SSBs, on-demand SSB transmission, or reducing the information carried in SSB)

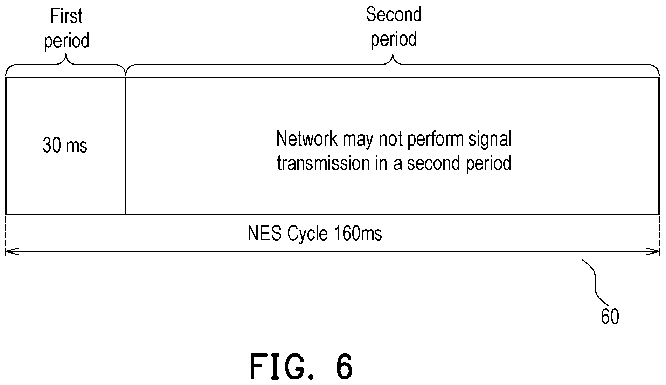

FIG. 6 illustrates a schematic diagram of a network energy saving cycle 60 according to an embodiment of the present disclosure. A network energy saving (NES) cycle 60 may be configured to the network or UE, wherein the NES cycle 60 may include a first period (or an active duration) and a second period (or a non-active duration) later than the first period. In other words, the first period (or the active duration) is followed by the second period (or the non-active duration). The network may perform signal transmission/reception with the UE in the first period, and the network may not perform one or more signals/channels transmissions/receptions with the UE in the second period. A UE can benefit from obtaining the structure of a NES cycle. If the UE does not know whether the network transmits a signal/channel or not, it may cause some problems if the UE performs an operation (e.g., channel measurement or beam failure detection) but the network does not transmit corresponding signal/channel. If the UE can obtain the structure of the NES cycle, the UE does not perform the operation while the network does not transmit the corresponding signal/channel. Therefore, one or more indications for indicating the structure of NES cycle can be considered, wherein the indications may be cell-specific or group-UE specific.

Table 1 represents options of configurations of NES cycle for DRX (or cell DRX) or DTX (or cell DTX), wherein configurations or signalings of Table 1 (e.g., first period, NES cycle, first indication, or second indication) may be for DTX (or cell DTX) only (i.e., type 0 configuration: network may perform signal transmission during first period), DRX (or cell DRX) only (type 1 configuration: network may perform signal reception during first period), or both DTX (or cell DTX) and DRX (or cell DRX) (type 2 configuration: network may perform signal transmission and reception during first period). That is, the configuration or signaling may be common for the cell DTX and the cell DRX if both the cell DTX and cell DRX are configured to the UE. A UE may receive a second indication including one or more configurations of NES cycle, and may apply the configurations of NES cycle in response to receiving a first indication including one or more configurations of first periods. The UE may perform one or more communication operations (e.g., PDCCH monitoring, PDSCH monitoring, SSB measurement, PUCCH transmission, PUSCH transmission, SRS transmission, or RA channel transmission) according to the first indication and the second indication. Specifically, the UE may perform one or more communication operations in a first period of a NES cycle.

**Table 1**

| | First Period | NES Cycle | PROS & CONS |
|---|---|---|---|
| Option 1 | Indicated via a first indication wherein the first indication is dynamically indicated (e.g. signaled via DCI, WUS ... etc.) | Indicated via a second indication wherein the second indication is fixed or semi-statically configured (e.g. signaled via RRC, | PROS: Less Overhead |
| | | | CONS: Less Flexibility |
| | | MAC CE...etc.) | |
| Option 2 | Indicated via a first indication wherein the first indication is dynamically indicated (e.g. signaled via DCI, WUS, ... etc.) | Indicated via a second indication wherein the second indication is dynamically indicated (e.g. signaled via DCI, WUS ... etc.) | PROS: Higher Flexibility |
| | | | CONS: Higher Overhead |
| Option 3 | The first period and the NES cycle can be jointly indicated via a first indication wherein the first indication is dynamically indicated (e.g. signaled via DCI, WUS ... etc.) | | PROS: Option 3 is a compromise between Option 1 and Option 2 |

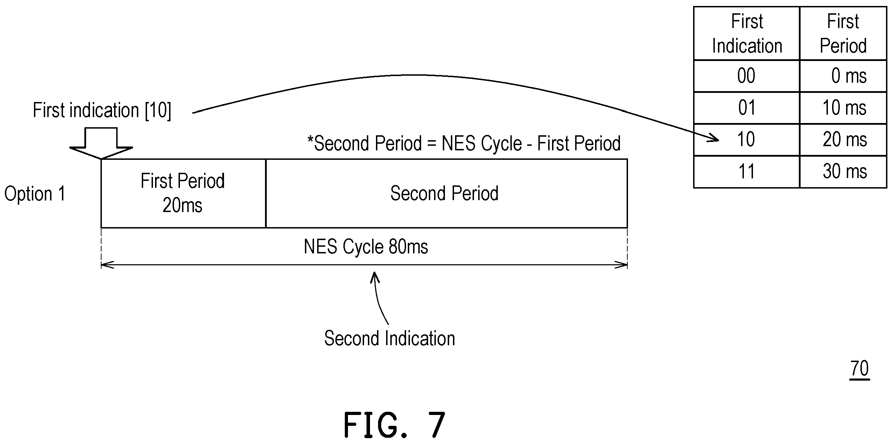

FIG. 7 illustrates a schematic diagram 70 of option 1 according to an embodiment of the present disclosure. In option 1, either the first period or the NES cycle is dynamically indicated, and the other information is a fixed value (e.g., pre-stored in the network or UE) or semi-statically configured (e.g., signaled via RRC or MAC CE). Specifically, a first period of a NES cycle (or configuration of first period) may be signaled via DCI or WUS, and one or more NES cycles (or one or more configurations of NES cycle) may be signaled via RRC or MAC CE. That is, the first indication may be signaled via DCI or WUS and the second indication may be signaled via RRC or MAC CE. For example, a UE may pre-store a lookup table (or configurations) including one or more mapping relationships between first indication and first period, wherein the lookup table may be configured to the UE by, for example, an RRC or MAC message. If the first indication received by the UE includes a bit stream [10], the UE may obtain the first period 20ms based on the bit stream [10] and the lookup table, as shown in FIG. 7. Moreover, UE may receive the second information via RRC for indicating NES cycle 80ms, as shown in FIG. 7.

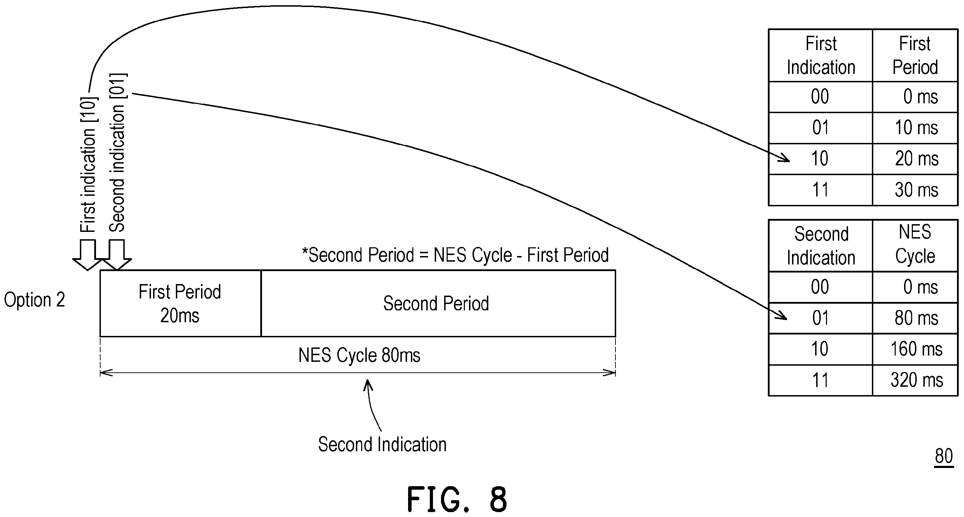

FIG. 8 illustrates a schematic diagram 80 of option 2 according to an embodiment of the present disclosure. In option 2, the first indication may be signaled via a first field of DCI and the second indication may be signaled via a second field of DCI. For example, a UE may pre-store a lookup table (or configurations) including one or more mapping relationships between the first indication and the first period and a lookup table including one or more mapping relationships between the second indication and the NES cycle, wherein the lookup tables may be configured to the UE by, for example, an RRC or MAC message. If the first indication received by the UE includes a bit stream [10] and the second indication received by the UE includes a bit stream [01], the UE may obtain first period 20ms and NES cycle 80ms based on the bit stream [10], bit stream [01], and the lookup tables, as shown in FIG. 8.

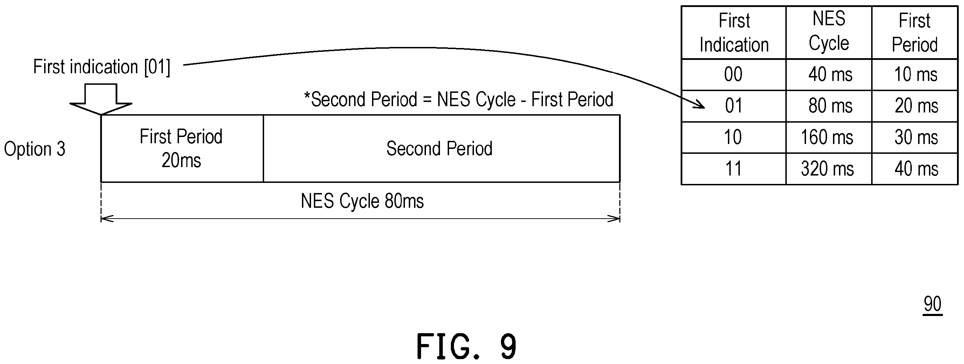

FIG. 9 illustrates a schematic diagram 90 of option 3 according to an embodiment of the present disclosure. In option 3, the UE may obtain configurations of a first period of a NES cycle and a NES cycle from the first indication, wherein the first indication may be signaled via a DCI or WUS. For example, the UE may pre-store a lookup table (or configurations) including one or more mapping relationships among the first indication, the NES cycle, or the first period, wherein the lookup table may be configured to the UE by, for example, an RRC or MAC message. If the first indication received by the UE includes a bit stream [01], the UE may obtain NES cycle 80ms and first period 20ms based on the bit stream [01] and the lookup table, as shown in FIG. 9.

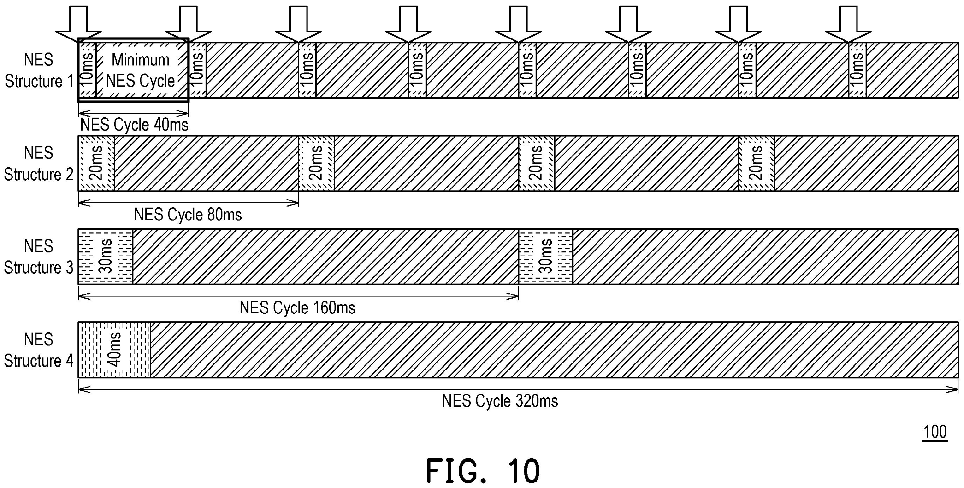

FIG. 10 illustrates a schematic diagram 100 of structures of NES cycle according to an embodiment of the present disclosure. If a minimal NES cycle is defined by the network or UE, the configured NES cycle may be a multiple of the minimal NES cycle. For example, if the minimal NES cycle is 40ms, the configured NES cycle may be selected from {40ms, 80ms, 160ms}. In one embodiment, a minimal NES cycle may be used for detecting the unknown NES cycle. The UE may detect the NES cycle or monitor PDCCH based on the minimal NES cycle (e.g., 40ms) if the UE does not detect a NES cycle. For example, if a UE is not configured with a NES cycle, the UE may perform a communication operation (e.g., PDCCH monitoring) during a first period of the predefined minimal NES cycle.

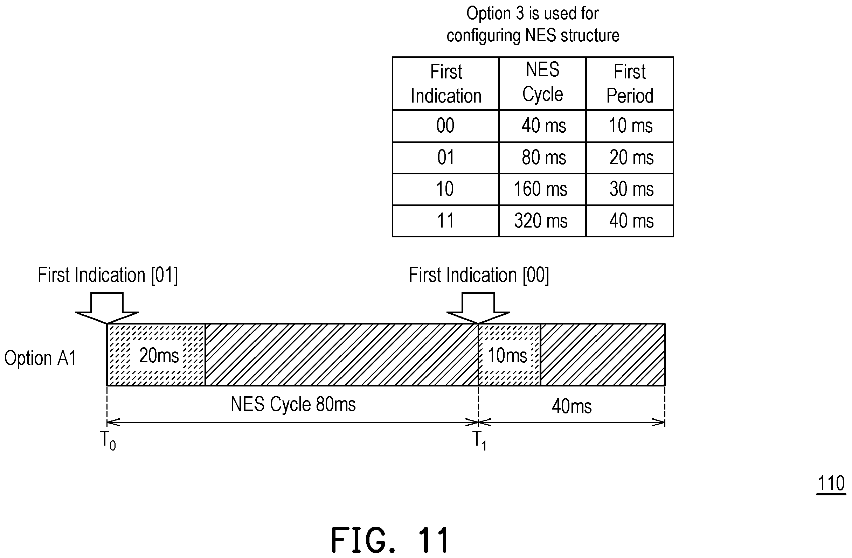

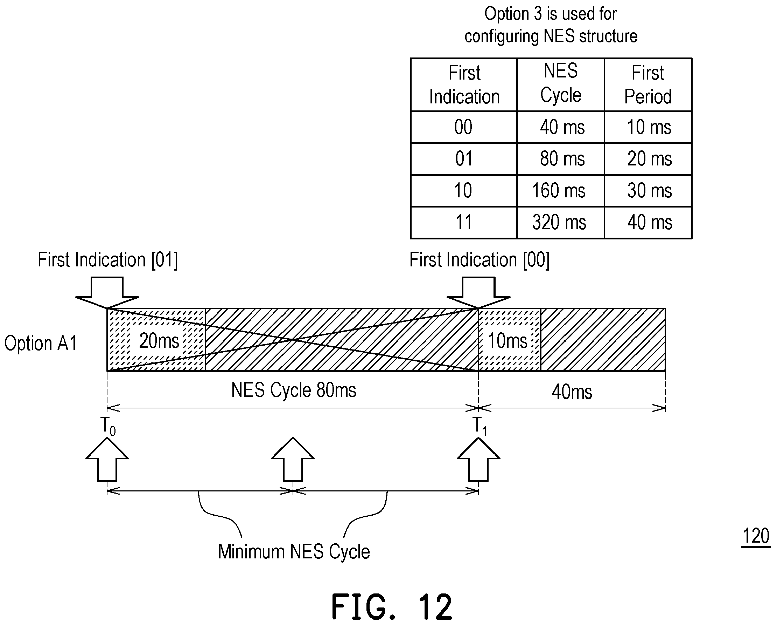

FIG. 11-12 illustrate schematic diagrams 110 and 120 of option A1 for NES cycle according to an embodiment of the present disclosure. Referring to FIG. 11, in option A1, the first indication may be applied per NES cycle. For example, if the UE detects the first indication [01] at time point T₀, the UE may apply NES cycle 80ms and first period 20ms at time point T₀ according to the first indication [01]. If the UE detects the first indication [00] at time point T₁, the UE may apply NES cycle 40ms and first period 10ms at time point T₁ according to the first indication [00]. Referring to FIG. 12, if the UE miss a first indication (e.g., first indication [01]) at time point T₀, the UE may blindly detect a first indication every minimum NES cycle (e.g., 40ms). Accordingly, the UE may detect the first indication [00] at time point T₁.

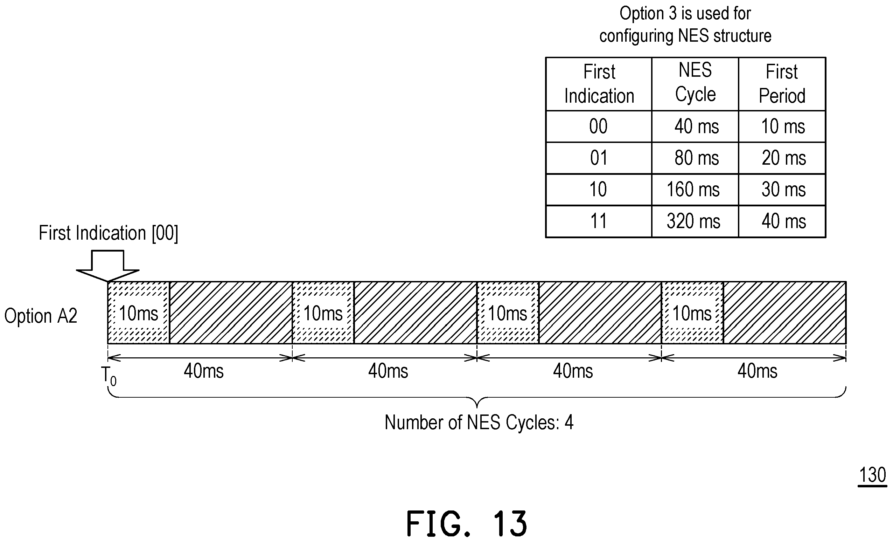

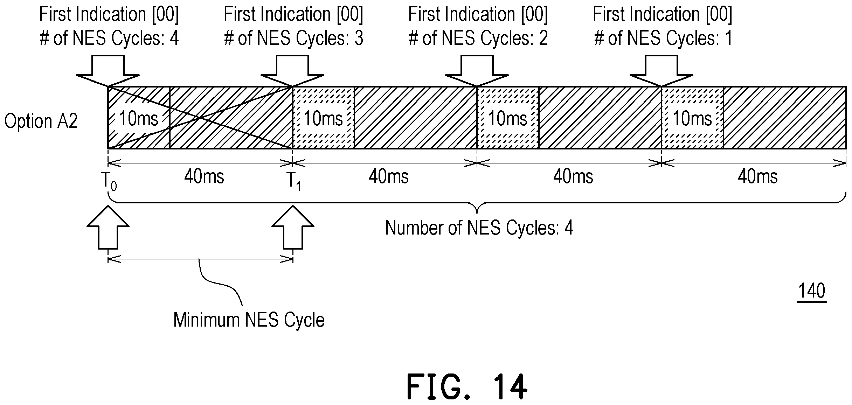

FIG. 13-14 illustrate schematic diagrams 130 and 140 of option A2 for NES cycle according to an embodiment of the present disclosure. Referring to FIG. 13, in option A2, the first indication may be applied to a number of NES cycles, wherein the number of NES cycle may be fixed, preconfigured, predefined, indicated via MAC CE, indicated via RRC, indicated via DCI, or indicated via WUS. For example, assume a first indication may be applied to 4 NES cycles. If the UE receives the first indication [00] at time point T₀, the UE may apply NES cycle 40ms and first period 10ms to 4 NES cycles from time point T₀. Referring to FIG. 14, if the UE miss a first indication (e.g., first indication [00]) at time point T₀, the UE may blindly detect a first indication every minimum NES cycle (e.g., 40ms). Accordingly, the UE may detect the first indication [00] at time point T₁. In one embodiment, the first indication may be transmitted to the UE together with the number of NES cycle. For example, the DCI received by the UE at the time point T₁ may carry the first indication [00] and may indicate that the number of NES cycle is 3. That is, the first indication [00] received at time point T₁ may be applied to 3 NES cycles from time point T₁. Since the UE knows the NES structure, the UE may skip detecting the first indication in the remaining period.

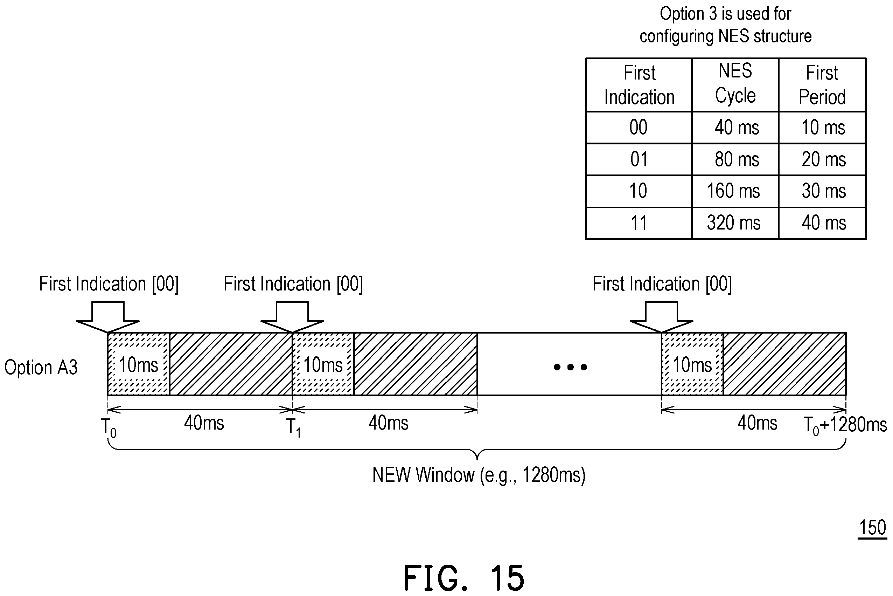

FIG. 15-16 illustrate schematic diagrams 150 and 160 of option A3 for NES cycle according to an embodiment of the present disclosure. Referring to FIG. 15, in option A3, the first indication may be applied to a NES window, wherein the NES window may be a time period. The NES window may be fixed, preconfigured, predefined, indicated via MAC CE, indicated via RRC, indicated via DCI, or indicated via WUS. The periodicity (e.g., 1280ms) or time offset (e.g., corresponding to an SFN (e.g., 10bits, 0 to 1023), hyper SFN (e.g., 10 bits, 0 to 1023), or T₀ (e.g., second or ms)) of the NES window may be determined according to a higher layer signal, wherein T₀ may be fixed, be predefined, or be a configurable timing. The time offset mentioned may be a time period from the starting of a first period of a NES cycle to the starting of next first period of next NES cycle (i.e., a time offset before the starting of the next active duration). For example, assume the UE receives a first indication [00] at time point T₀ and the time offset configured to the UE is 40ms, the UE may determine that the next active duration starts from time point T₁=T₀+40ms.

In one example, assume the UE obtains the NES window = 1280ms. If the UE obtains the first indication [00] at time point T₀ (e.g., T₀ may be a fixed value or indicated by gNB), the UE may apply the same NES cycle and first period corresponding to the first indication [00] during T₀ to T₀+1280ms. Since the UE knows the NES structure, the UE may skip detecting the first indication in the remaining period. That is, the UE may need to detect only one first indication [00] at T₀ during the whole NES window (i.e., T₀ to T₀+128ms).

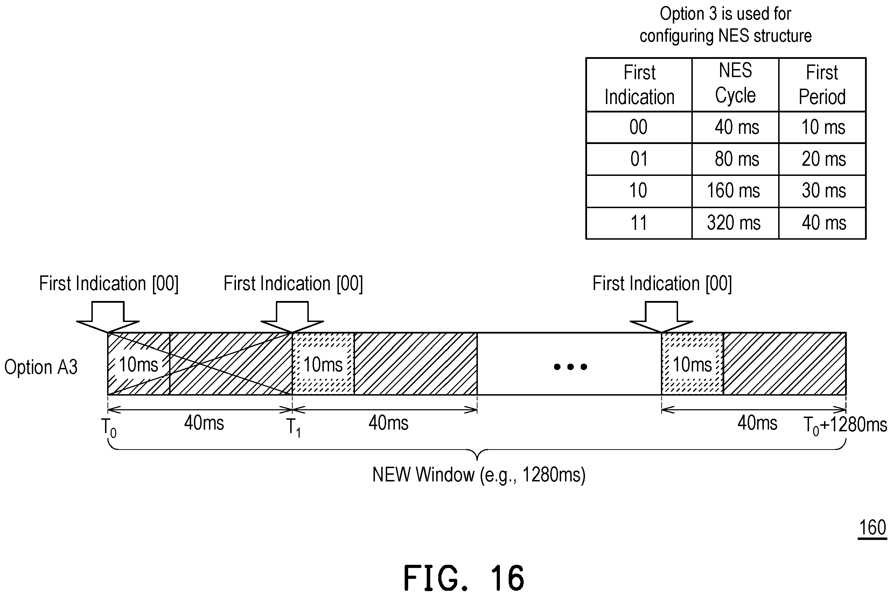

Referring to FIG. 16, assume the UE obtains the NES window = 1280ms. If the UE miss the first indication [00] at time point T₀ (e.g., T₀ may be a fixed value or indicated by gNB), the UE may blindly detect the first indication every minimum NES cycle (e.g., 40ms). Accordingly, the UE may obtain the first indication [00] at time point T₁, and the UE knows that the received first indication may be applied to the NEW window (i.e., T₀ to T₀+1280ms). Since the UE knows the NES structure, the UE may skip detecting in the remaining period. That is, the UE may need to detect only one first indication [00] at T₁ during the remaining time of the NES window (i.e., T₁ to T₀+128ms).

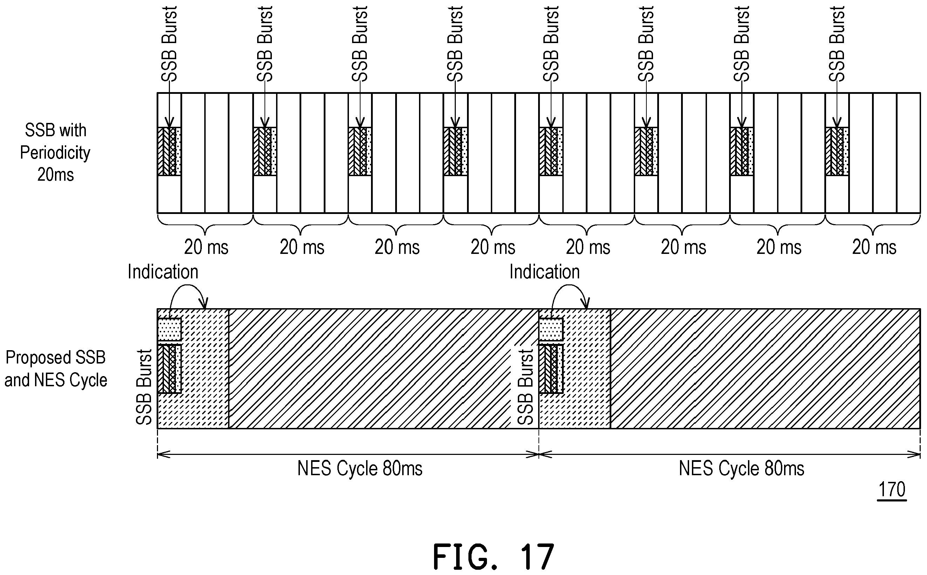

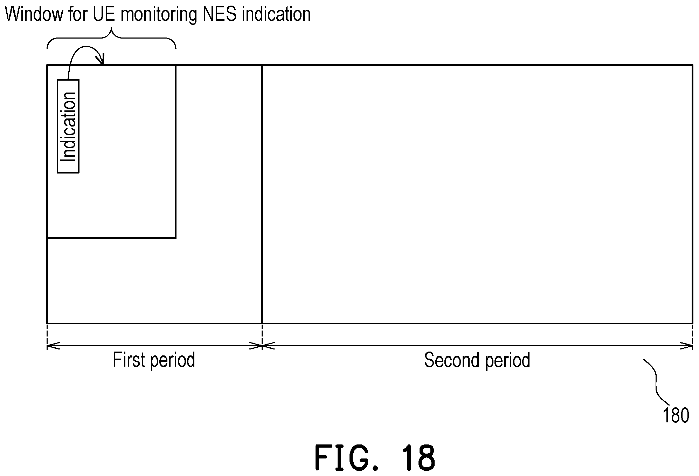

FIG. 17 illustrates a schematic diagram 170 of a structure of SSB for NES cycle according to an embodiment of the present disclosure. The UE behavior for obtaining time/frequency synchronization from SSB and obtaining the corresponding NES cycle may include: once the UE successfully detects SSB, the UE may further detect a NES indication (e.g., physical layer indication such as DCI or WUS), wherein the NES indication may be transmitted in WUS, DCI, or SSB. If the NES indication is detected by the UE, the UE may assume NES cycle is presented. In one embodiment, the UE may monitor the NES indication in a window, wherein the window may be included in the first period of NES cycle 180, as shown in FIG. 18. The network may have multiple opportunities for transmitting NES indication during the window. Accordingly, the presence of NES indication can be confirmed by the UE.

In one embodiment, for a UE not supporting to obtain the NES indication, the UE may be configured with a first SSB periodicity (i.e., time period between two SSB bursts transmitted to the UE). The first SSB periodicity may make sure that the UE can always obtain the SSB regardless the NES indication indicated by the network. The first SSB periodicity may be transmitted to the UE via physical layer signaling (e.g., DCI) or higher layer signaling (e.g., RRC, SIB, or MAC-CE). Table 2 represents configurations for NES structure. The first SSB periodicity may be defined as the maximum NES cycle (i.e., 320ms) in the Table 2.

**Table 2**

| First indication | NES Cycle | First Period |
|---|---|---|
| 00 | 40ms | 10ms |
| 01 | 80ms | 20ms |
| 10 | 160ms | 30ms |
| 11 | 320ms | 40ms |

In one embodiment, when the network is operating in an energy saving mode, a legacy UE may be configured with a first SSB periodicity, wherein the first SSB periodicity may be selected from the largest value of the intersection of the NES cycle and a set of legacy SSB periodicity. Assume a set of legacy SSB periodicity is {5ms, 10ms, 20ms, 40ms, 80ms, 160ms} and configurations for NES structure are as shown in Table 3. The first SSB periodicity configured to the legacy UE may select the largest value 160ms of the intersection of the NES cycle and the set of legacy SSB periodicity as the first SSB periodicity.

**Table 3**

| First indication | NES Cycle | First Period |
|---|---|---|
| 00 | 20ms | 10ms |
| 01 | 40ms | 20ms |
| 10 | 80ms | 30ms |
| 11 | 160ms | 40ms |

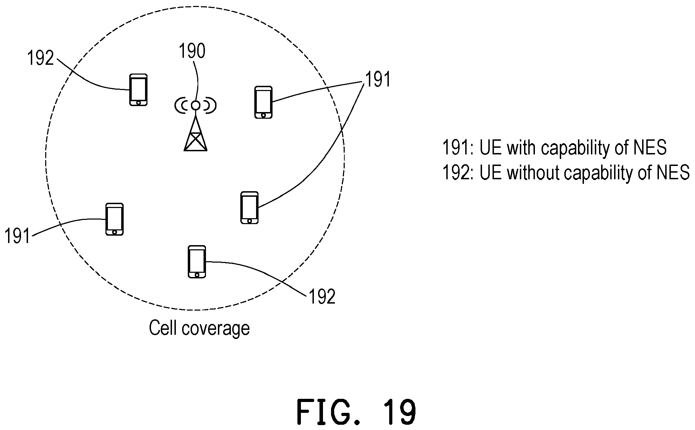

FIG. 19 illustrates a schematic diagram of cell coverage according to an embodiment of the present disclosure. When the network is operating in energy saving mode in cell 190, a legacy UE 192 (e.g., UE not capable of NES) may be configured to: receive a deactivation indication of cell 190; or receive an activation indication of another cell which is not operating in energy saving mode. On the other hand, an advanced UE 191 (e.g., UE capable of NES) may communicate with cell 190 based on the configured NES cycle.

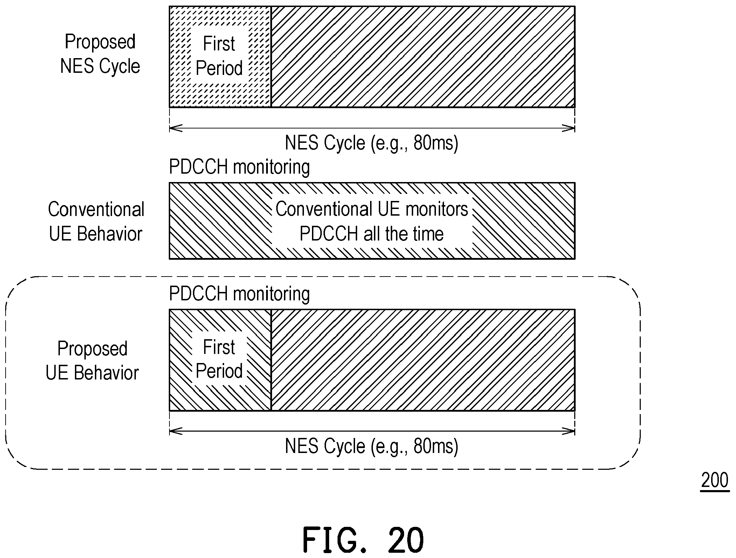

UE behavior needs to be determined if NES cycle is configured. FIG. 20 illustrates a schematic diagram 200 of behavior of UE not configured with connected mode DRX according to an embodiment of the present disclosure. For a conventional UE behavior, UE should always perform PDCCH monitoring if the UE is not configured with connected mode DRX. However, this embodiment shown that the UE may perform a communication operation (e.g., PDCCH monitoring) according to the NES configuration (i.e., NES cycle and first period) if the UE is not configured with connected mode DRX. For example, the UE may perform PDCCH monitoring during a first period of a NES cycle. For another example, if a time slot (e.g., UL slot or DL slot) is within a first period of a NES cycle, the UE may transmit, receive, or monitor one or more signals (e.g., UL signal such as CSI-RS report or SRS transmission or DL signal) or channels (e.g., PDCCH for one or more DCI formats) in the time slot, wherein the time slot may be a time period after the UE receiving a DCI (e.g., DCI for applying configurations of NES cycle). On the other hand, if the time slot is within the second period of the NES cycle, the UE may stop transmitting, receiving, or monitoring the one or more signals or channels in the time slot.

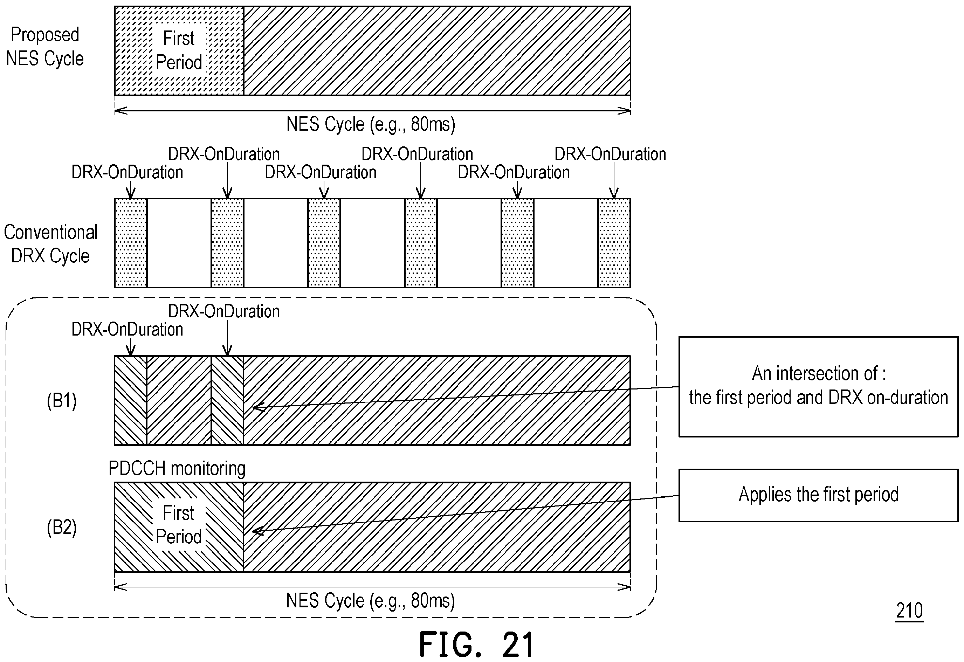

FIG. 21 illustrates a schematic diagram 210 of behavior of UE configured with connected mode DRX according to an embodiment of the present disclosure. If the UE is configured with connected mode DRX, options B1 and B2 may be considered. In option B1, the UE may perform the communication operation according to both the NES configuration and the DRX configuration (e.g., DRX cycle or on-duration of DRX cycle). For example, assume the first period of the NES cycle at least partially overlaps with the on-duration of the DRX cycle (e.g., DRX cycle of connected mode DRX). The UE may perform the PDCCH monitoring during an intersection of the first period of the NES cycle and the on-duration (or active time) of the DRX cycle. That is, the UE operated in the connected mode DRX active time of the first period may perform the PDCCH monitoring. In option B2, one or more DRX related parameters (e.g., *drx-onDuration, drx-LongCycle,* or *drx-SlotOffset*) may be replaced with parameter of NES configuration. For example, on-duration of the DRX cycle may be replaced by the first period of the NES cycle. That is, the UE operated in the first period may perform the PDCCH monitoring.

In one embodiment, a UE may perform one or more UL transmissions during a second period (non-active duration) of a NES cycle. The following options U1, U2, and U3 may be considered for UE behavior for performing UL transmissions during the second period.

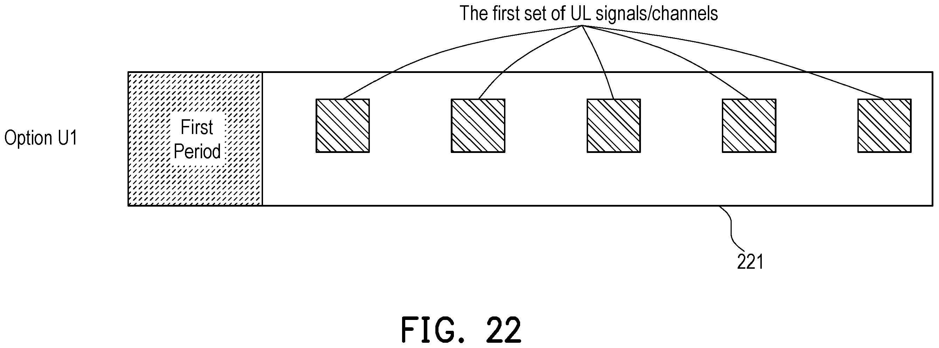

FIG. 22 illustrates a schematic diagram of option U1 of the NES cycle according to an embodiment of the present disclosure. The UE may transmit one or more UL signals or UL channels (or a first set of UL signals/channels) during the second period 221 of the NES cycle, wherein the one or more UL signals or UL channels may be predetermined, configured (e.g., via RRC message), informed, or indicated (e.g., via DCI) by the network. The one or more UL signals or UL channels may include SR, CG PUSCH, SR and CG PUSCH, or PRACH, but is not limited thereof.

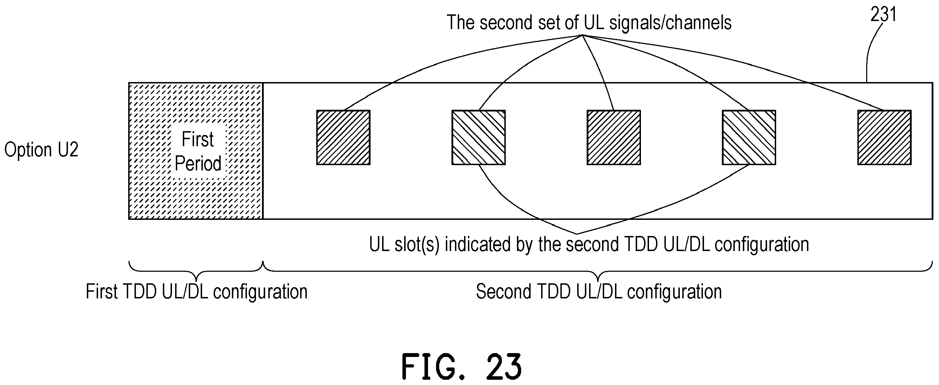

FIG. 23 illustrates a schematic diagram of option U2 of the NES cycle according to an embodiment of the present disclosure. Assume the UE is configured with a first TDD UL/DL configuration during the first period of the NES cycle, the UE may transmit one or more UL signals or UL channels (or a second set of UL signals/channels) during the second period 231 according to a second TDD UL/DL configuration, wherein the second TDD UL/DL configuration may be the same as or different from the first TDD UL/DL configuration. The UE may transmit the one or more UL signal or UL channels in a UL slot indicated by the second TDD UL/DL configuration. The one or more UL signals or UL channels may be predetermined, configured (e.g., via RRC message), informed, or indicated (e.g., via DCI) by the network. The one or more UL signals or UL channels may include SR, CG PUSCH, SR and CG PUSCH, or PRACH, but is not limited thereof. Table 4 is an example of NES configurations associated with NES cycles, first periods, a first TDD UL/DL configuration, or a second TDD UL/DL configuration.

**Table 4**

| NES configurations | NES Cycle | First Period | First TDD UL/DL Configuration | Second TDD UL/DL Configuration |
|---|---|---|---|---|
| 0 | 40ms | 10ms | UL/DL configuration 1 | UL/DL configuration 0 |
| 1 | 80ms | 20ms | UL/DL configuration 0 | UL/DL configuration 1 |
| 2 | 160ms | 30ms | UL/DL configuration 3 | UL/DL configuration 2 |
| 3 | 320ms | 40ms | UL/DL configuration 2 | UL/DL configuration 3 |

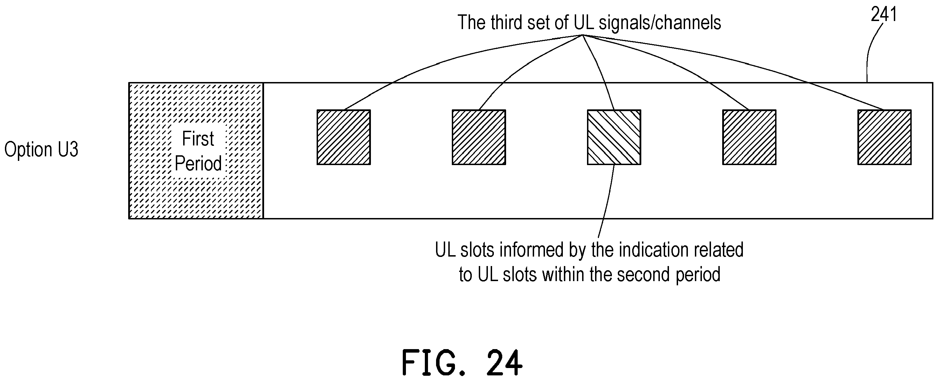

FIG. 24 illustrates a schematic diagram of option U3 of the NES cycle according to an embodiment of the present disclosure. The UE may transmit one or more UL signals or UL channels (or a third set of UL signals/channels) during the second period 241 according to an indication, wherein the indication may be related to one or more UL slots within the second period 241. Specifically, the one or more UL signals or UL channels in the UL slots indicated by the indication may be transmitted by the UE. The one or more UL signals or UL channels may be predetermined, configured (e.g., via RRC message), informed, or indicated (e.g., via DCI) by the network. The one or more UL signals or UL channels may include SR, CG PUSCH, SR and CG PUSCH, or PRACH, but is not limited thereof. The one or more UL slots may be explicitly or implicitly indicated by the indication. In one embodiment, the indication mentioned above may be a first indication related to a NES structure (i.e., indication for indicating a NES cycle or a first period of a NES cycle).

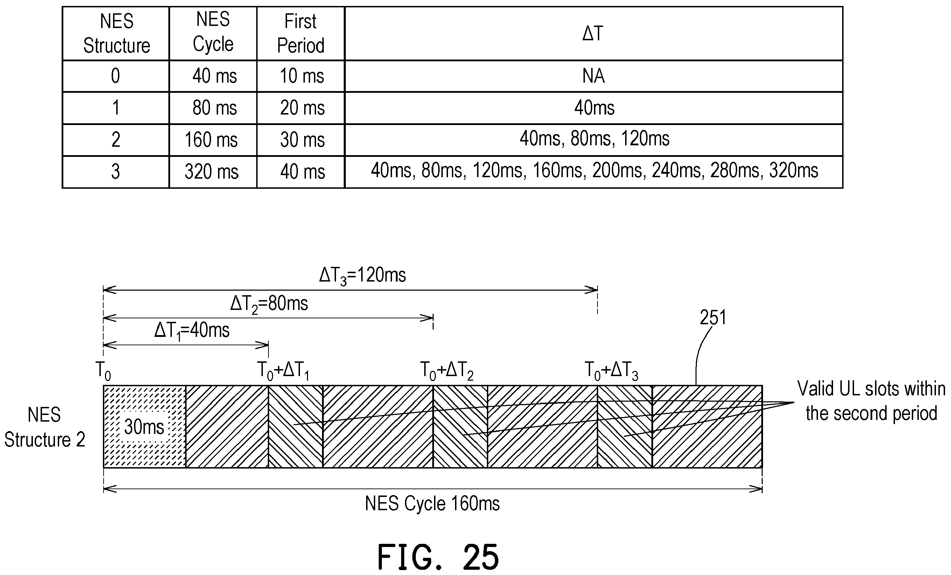

FIG. 25 illustrates a schematic diagram of explicitly indicated valid UL slot according to an embodiment of the present disclosure. An indication for indicating one or more valid UL slots during the second period 251 may include one or more time offsets ΔT for a specific NES structure, wherein each time offset may include a time period between the starting of the NES cycle and the indicated valid UL slot (e.g., the starting of the indicated valid UL slot). For example, assume NES structure 2 is applied by the UE, and the UE receives an indication for indicating time offsets 40ms (Δ*T*₁), 80ms (Δ*T*₂), and 120ms (Δ*T*₃) for the second period 251 of the NES cycle. If the starting time point of the NES cycle is *T*₀, the UE may determine a valid UL slot starting from *T*₀ + Δ*T*₁ (Δ*T*₁ = 40ms), a valid UL slot starting from *T*₀ + Δ*T*₂ (Δ*T*₁ = 80*ms*), and a valid UL slot starting from *T*₀ + Δ*T*₃ (Δ*T*₃ = 120ms) in the second period 251.

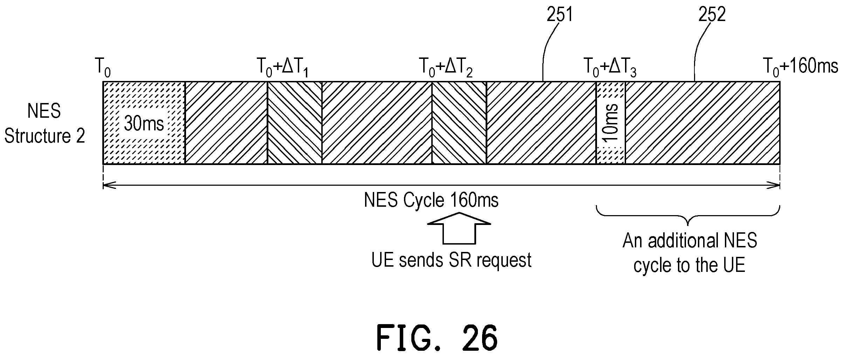

In one embodiment, after the UE obtains one or more valid UL slots in a second period of a NES cycle, the UE may determine an additional NES cycle according to one of the UL slots (e.g., the last UL slot). Referring to FIG. 25, after the UE obtains the UL slot starting from *T*₀ + Δ*T*₂ (Δ*T*₂ = 80ms) in the second period 251, the UE may determine an additional NES cycle 252 according to the UL slot, wherein the starting time of the NES cycle 252 may be *T*₀ + Δ*T*₃ (Δ*T*₃ = 120ms), as shown in FIG. 26. The additional NES cycle 252 may be included in the second period 251 of the NES cycle. In one embodiment, the network may further configure a NES cycle (e.g., minimum NES cycle) for the UE in response to the UE sending a SR request.

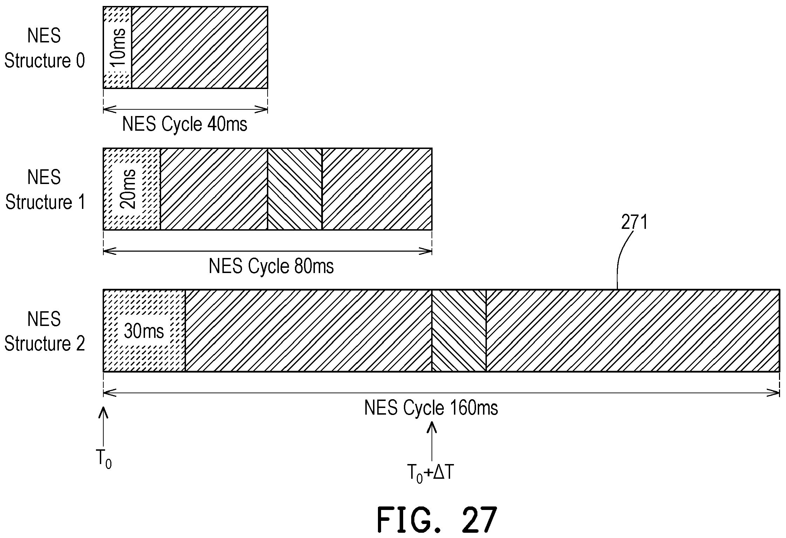

FIG. 27 illustrates a schematic diagram of implicitly indicated UL slot according to an embodiment of the present disclosure. If a NES cycle is configured to the UE, the UE may determine, according to the NES cycle, a time offset Δ*T* for indicating the UL slot within the second period 271 of the NES cycle. In one embodiment, the time offset Δ*T* = 1/2 · *NES Cycle.* For example, assume NES structure 2 (i.e., first period 30ms and NES cycle 160ms) is applied by the UE. If the starting time point of the NES cycle is *T*₀, the UE may determine a UL slot starting from *T*₀ + Δ*T* (Δ*T* = 80ms) in the second period 271.

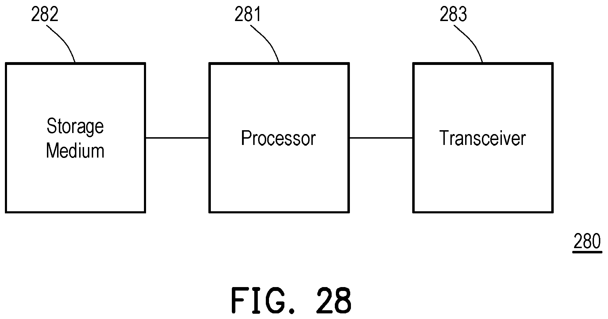

FIG. 28 illustrates a schematic diagram of UE 280 according to an embodiment of the present disclosure, wherein the UE 280 may execute the functions or steps implemented by the UE in the embodiments corresponding to FIG. 1 to FIG. 37. The UE 280 may include a processor 281, a storage medium 282, and a transceiver 283.

The processor 281 is, for example, a graphics processing unit (GPU), an image signal processor (ISP), an image processing unit (IPU), a central processing unit (CPU), another programmable general purpose or special purpose micro control unit (MCU), a microprocessor, a digital signal processor (DSP), a programmable controller, a special application specific integrated circuit (ASIC), an arithmetic logic unit (ALU), a complex programmable logic device (CPLD), a field programmable gate array (FPGA) or other similar components or a combination of the foregoing components. The processor 281 may be coupled to the storage medium 282 and the transceiver 283, and may access and excrete a plurality of modules and various application programs stored in the store medium 282.

The storage medium 282 is, for example, any type of fixed or removable random access memory (RAM), a read-only memory (ROM), a flash memory, a hard disk drive (HDD), a solid state drive (SSD), or similar components or a combination of the foregoing components, and is configured to store the plurality of modules or various application programs that can be executed by the processor 281.

The transceiver 283 may be configured to transmit or receive wireless signals. The transceiver 283 may also perform operations such as low noise amplifying, impedance matching, frequency mixing, up or down frequency conversion, filtering, amplifying, and so forth. The transceiver 283 may include one or more digital-to-analog (D/A) converters or analog-to-digital (A/D) converters.

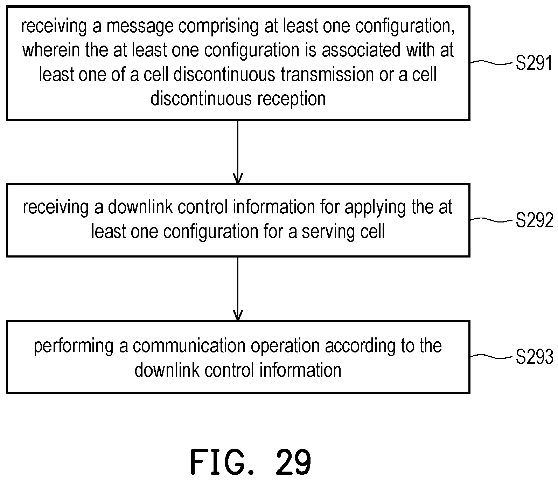

FIG. 29 illustrates a flowchart of a method of communication operation according to an embodiment of the present disclosure, wherein the method may be implemented by the UE 280 as shown in FIG. 28. In step S291, receiving a message comprising at least one configuration, wherein the at least one configuration is associated with at least one of a cell discontinuous transmission or a cell discontinuous reception. In step S292, receiving a downlink control information for applying the at least one configuration for a serving cell. In step S293, performing a communication operation according to the downlink control information.

In summary, the present disclosure provides a manner for the network to schedule the transmission occasions of one or more UEs. The network may consolidate the data transmissions of the UEs within a specific time period by configuring a NES cycle to each UE, allowing network to concentrate its idle time. Accordingly, the energy consumption at the network side can be effectively reduced, thereby achieving energy saving.

## Claims

1. A method of communication operation, adapted to a user equipment (280), the method comprising:
receiving a message comprising at least one configuration, wherein the at least one configuration is associated with at least one of a cell discontinuous transmission or a cell discontinuous reception;
receiving a downlink control information for applying the at least one configuration for a serving cell; and
performing a communication operation according to the downlink control information.

2. The method of claim 1, wherein the at least one configuration or the downlink control information is for the cell discontinuous transmission only, the cell discontinuous reception only, or both the cell discontinuous transmission and the cell discontinuous reception.

3. The method of claim 1, wherein the at least one configuration comprises at least one of an active duration or a cycle (60, 180) for the at least one of the cell discontinuous transmission or the cell discontinuous reception, wherein the cycle (60, 180) comprises the active duration and a non-active duration (221, 231, 241, 251, 271).

4. The method of claim 3, wherein the cycle (60, 180) is common for the cell discontinuous transmission and the cell discontinuous reception when both the cell discontinuous transmission and the cell discontinuous reception are configured to the user equipment (280).

5. The method of claim 3, wherein the active duration at least partially overlaps with an on-duration of a connected mode discontinuous reception configured to the user equipment (280).

6. The method of claim 1, wherein the downlink control information indicates at least one of an active duration or a cycle (60, 180) for the at least one of the cell discontinuous transmission or the cell discontinuous reception, wherein the cycle (60, 180) comprises the active duration and a non-active duration (221, 231, 241, 251, 271).

7. The method of claim 6, wherein the cycle (60, 180) is common for the cell discontinuous transmission and the cell discontinuous reception when both the cell discontinuous transmission and the cell discontinuous reception are configured to the user equipment (280).

8. The method of claim 6, wherein the active duration at least partially overlaps with an on-duration of a connected mode discontinuous reception configured to the user equipment (280).

9. The method of claim 1, wherein the at least one configuration is associated with at least one of the following:
a cycle (60, 180) for the at least one of the cell discontinuous transmission or the cell discontinuous reception;
an active duration for the at least one of the cell discontinuous transmission or the cell discontinuous reception; or
a time offset before starting the active duration.

10. The method of claim 1, wherein the communication operation comprises at least one of the following: a physical downlink control channel monitoring, a physical downlink shared channel reception, a channel state information reference signal measurement, or a synchronization signal block measurement.

11. The method of claim 1, wherein the communication operation comprises at least one of the following: a physical uplink control channel transmission, a physical uplink shared channel transmission, a sounding reference signal transmission, or a random access channel transmission.

12. The method of claim 1, wherein the communication operation comprises:
in response to a downlink slot is within an active duration, receiving one or more downlink signals or channels in the downlink slot from the serving cell; and
in response to the downlink slot is within a non-active duration (221, 231, 241, 251, 271), stopping receiving the one or more downlink signals or channels in the downlink slot.

13. The method of claim 12, wherein the downlink slot is a first time period after receiving the downlink control information.

14. The method of claim 12, wherein the one or more downlink signals or channels comprises a physical downlink control channel for at least one downlink control information format.

15. The method of claim 1, wherein the communication operation comprises:
monitoring a physical downlink control channel for at least one downlink control information format during an active duration for the cell discontinuous transmission; and
stopping monitoring the physical downlink control channel for the at least one downlink control information format during a non-active duration (221, 231, 241, 251, 271) for the cell discontinuous transmission.

16. The method of claim 15, wherein the user equipment (280) is in connected mode discontinuous reception active time.

17. The method of claim 1, wherein the communication operation comprises:
in response to an uplink slot is within an active duration, transmitting one or more uplink signals or channels in the uplink slot to the serving cell; and
in response to the uplink slot is within a non-active duration (221, 231, 241, 251, 271), stopping transmitting the one or more uplink signals or channels in the uplink slot to the serving cell.

18. The method of claim 17, wherein the uplink slot is a second time period after receiving the downlink control information.

19. The method of claim 14, wherein the one or more uplink signals or channels comprises at least one of a channel state information reference signal report or a sound reference signal transmission.

20. A user equipment (280), comprising:
a transceiver (283); and
a processor (281), coupled to the transceiver (283), wherein the processor (281) is configured to:
receive a message comprising at least one configuration, wherein the at least one configuration is associated with at least one of a cell discontinuous transmission or a cell discontinuous reception;
receive a downlink control information for applying the at least one configuration for a serving cell; and
perform a communication operation according to the downlink control information.
